# EUROPEAN PATENT APPLICATION

(11) **EP 4 319 417 A1**
(43) Date of publication of application: **07.02.2024**
(21) Application number: 22794995.5
(22) Date of filing: 28.04.2022
(51) Int. Cl.: H04W 72/08, H04B 7/155

(54) **WORKING PARAMETER CONFIGURATION METHOD AND APPARATUS, SMART SIGNAL AMPLIFIER, AND NETWORK SIDE DEVICE**

(30) Priority: 29.04.2021 CN 202110476814
(71) Applicant: Vivo Mobile Communication Co., Ltd., Dongguan, Guangdong 523863 (CN)
(72) Inventor: LIU, Jinhua, Dongguan, Guangdong 523863 (CN)
(74) Representative: Murgitroyd & Company
(86) International application number: PCT/CN2022/089948
(87) International publication number: WO 2022/228525

(57) **Abstract**

This application discloses an operating parameter configuration method and apparatus, an intelligent signal amplifier, and a network side device, where the operating parameter configuration method in the embodiments of this application includes: receiving, by an intelligent signal amplifier, a first broadcast message from a network side device, where the first broadcast message is configured to indicate that the intelligent signal amplifier is supported to access the network side device; initiating, by the intelligent signal amplifier, target random access based on the first broadcast information; and receiving, by the intelligent signal amplifier, an operating parameter from the network side device after the target random access is successful, where the target random access includes 2-step random access or 4-step random access.

## Description

### CROSS-REFERENCE TO RELATED APPLICATION

This application claims priority to Chinese Patent Application No. 202110476814.2, filed on April 29, 2021 in China, which is incorporated herein by reference in its entirety.

### TECHNICAL FIELD

This application pertains to the field of communications technologies, and in particular, to an operating parameter configuration method and apparatus, an intelligent signal amplifier, and a network side device.

### BACKGROUND

The signal amplifier can receive and amplify a downlink signal of a network side device, so that intensity of a signal transmitted to user equipment (User Equipment, UE) increases, and the signal amplifier can also amplify an uplink signal of the UE, so that intensity of the uplink signal transmitted to the network side device increases. In this way, the signal amplifier can expand a coverage of the cell (a range in which the mobile terminal communicates with the network side device through a wireless channel).

Similar to the signal amplifier, the intelligent signal amplifier can also be controlled by the network side device, for example, the network side device controls a sending beam of the intelligent signal amplifier. Before the intelligent signal amplifier is controlled by the network side device, the intelligent signal amplifier needs to access the network side device, so that the network side device can control forwarding of the signal by controlling a radio frequency part of the intelligent signal amplifier.

### SUMMARY

Embodiments of this application provide an operating parameter configuration method and apparatus, an intelligent signal amplifier, and a network side device, which can solve the problem of how the intelligent signal amplifier accesses the network side device.

According to a first aspect, an operating parameter configuration method is provided, where the method is applied to an intelligent signal amplifier and includes: receiving, by an intelligent signal amplifier, a first broadcast message from a network side device, where the first broadcast message is configured to indicate that the intelligent signal amplifier is supported to access the network side device; initiating, by the intelligent signal amplifier, target random access based on the first broadcast information; and receiving, by the intelligent signal amplifier, an operating parameter from the network side device after the target random access is successful, where the target random access includes 2-step random access or 4-step random access.

According to a second aspect, an operating parameter configuration apparatus is provided, where the apparatus is applied to an intelligent signal amplifier and includes: a first receiving module, a connection establishment module, and a second receiving module; the first receiving module is configured to receive a first broadcast message from a network side device, where the first broadcast message is configured to indicate that an intelligent signal amplifier is supported to access the network side device; the connection establishment module is configured to initiate target random access based on the first broadcast information received by the first receiving module; and the second receiving module is configured to receive an operating parameter from the network side device after the target random access initiated by the connection establishment module is successful, where the target random access includes 2-step random access or 4-step random access.

According to a third aspect, an operating parameter configuration method is provided, where the method is applied to a network side device and includes: sending, by a network side device, a first broadcast message, where the first broadcast message is configured to indicate that an intelligent signal amplifier is supported to access the network side device; and sending, by the network side device, the operating parameter to the intelligent signal amplifier after successfully accessing the intelligent signal amplifier.

According to a fourth aspect, an operating parameter configuration apparatus is provided, where the apparatus is applied to a network side device and includes: a first sending module and a second sending module; the first sending module is configured to send a first broadcast message, where the first broadcast message is configured to indicate that an intelligent signal amplifier is supported to access the network side device; and the second sending module is configured to send the operating parameter to the intelligent signal amplifier after successfully accessing the intelligent signal amplifier.

According to a fifth aspect, an intelligent signal amplifier is provided. The terminal includes a processor, a memory, and a program or an instruction stored in the memory and executable on the processor, where when the program or the instruction is executed by the processor, steps of the method according to the first aspect are implemented.

According to a sixth aspect, an intelligent signal amplifier is provided, including a processor and a communications interface, where the processor is configured to: receive a first broadcast message from a network side device, where the first broadcast message is configured to indicate that the intelligent signal amplifier is supported to access the network side device; initiate target random access based on the first broadcast information; and receive an operating parameter from the network side device after the target random access is successful, where the target random access includes 2-step random access or 4-step random access.

According to a seventh aspect, a network side device is provided, where the network side device includes a processor, a memory, and a program or an instruction stored in the memory and executable on the processor, and when the program or the instruction is executed by the processor, steps of the method according to the third aspect are implemented.

According to an eighth aspect, a network side device is provided, including a processor and a communications interface, where the processor is configured to: send a first broadcast message, where the first broadcast message is configured to indicate that an intelligent signal amplifier is supported to access the network side device; and send the operating parameter to the intelligent signal amplifier after successfully accessing the intelligent signal amplifier.

According to a ninth aspect, a readable storage medium is provided, where the readable storage medium stores a program or an instruction, and when the program or the instruction is executed by a processor, steps of the method according to the first aspect or the third aspect are implemented.

According to a tenth aspect, a chip is provided, where the chip includes a processor and a communications interface, the communications interface is coupled to the processor, and the processor is configured to run a program or an instruction to implement the method according to the first aspect or the third aspect.

According to an eleventh aspect, a computer program/program product is provided, where the computer program/program product is stored in a non-volatile storage medium, and the program/program product is executed by at least one processor to implement steps of the operating parameter configuration method according to the first aspect, or steps of the operating parameter configuration method according to the third aspect.

In this embodiment of this application, the first broadcast message sent by the network side device is received by the intelligent signal amplifier, and whether the network side device supports access of the intelligent signal amplifier is determined through the first broadcast message, so that the intelligent signal amplifier amplifies only the signal sent by the network side device that supports signal amplification. In this way, the intelligent signal amplifier amplifies only the signal that needs to be amplified, and effectiveness of intelligent signal amplification is improved. Moreover, the intelligent signal amplifier initiates target random access based on the first broadcast message, and finally, after the target random access is successful, the intelligent signal amplifier receives the operating parameter from the network side device, so that the intelligent signal amplifier amplifies and forwards uplink and downlink signals with an appropriate operating parameter.

### BRIEF DESCRIPTION OF DRAWINGS

FIG. 1 is a system architecture diagram of a communications system according to an embodiment of this application;
FIG. 2 is a first schematic flowchart of an operating parameter configuration method according to an embodiment of this application;
FIG. 3 is a second schematic flowchart of an operating parameter configuration method according to an embodiment of this application;
FIG. 4 is a third schematic flowchart of an operating parameter configuration method according to an embodiment of this application;
FIG. 5 is a fourth schematic flowchart of an operating parameter configuration method according to an embodiment of this application;
FIG. 6 is a fifth schematic flowchart of an operating parameter configuration method according to an embodiment of this application;
FIG. 7 is a sixth schematic flowchart of an operating parameter configuration method according to an embodiment of this application;
FIG. 8 is a first schematic diagram of a structure of an operating parameter configuration apparatus according to an embodiment of this application;
FIG. 9 is a second schematic diagram of a structure of an operating parameter configuration apparatus according to an embodiment of this application;
FIG. 10 is a third schematic diagram of a structure of an operating parameter configuration apparatus according to an embodiment of this application;
FIG. 11 is a fourth schematic diagram of a structure of an operating parameter configuration apparatus according to an embodiment of this application;
FIG. 12 is a schematic diagram of a structure of a communications device according to an embodiment of this application;
FIG. 13 is a schematic diagram of a hardware structure of an intelligent signal amplifier according to an embodiment of this application; and
FIG. 14 is a schematic diagram of a hardware structure of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6th generation (6th Generation, 6G) communications system.

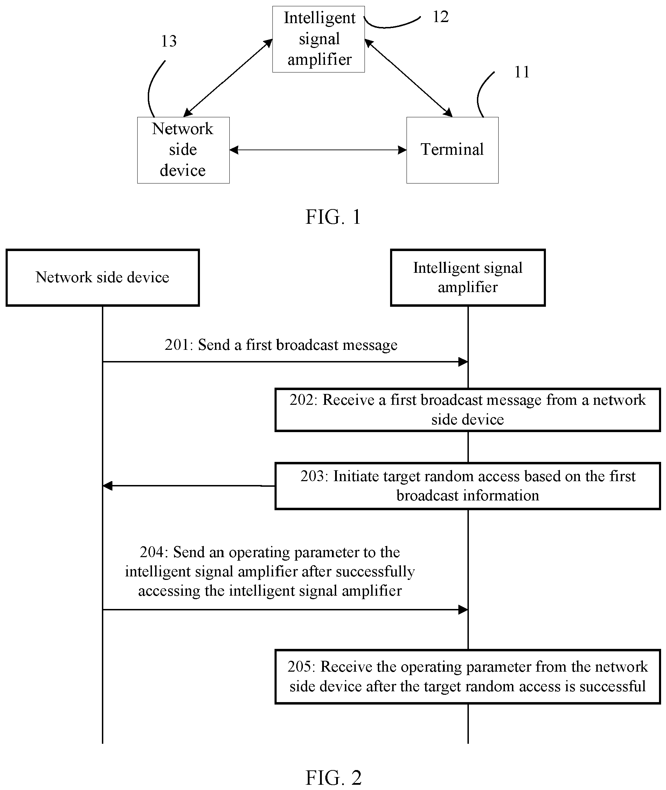

FIG. 1 is a block diagram of a wireless communications system to which embodiments of this application can be applied. The wireless communications system includes a terminal 11, an intelligent signal amplifier 12, and a network side device 13.

The intelligent signal amplifier 12 is used to expand the coverage of the cell, including receiving and amplifying a downlink signal from the network side device 13 to increase signal strength of the downlink signal reaching the terminal 11, and further including receiving and amplifying an uplink signal from the terminal 11 to increase the signal strength of the uplink signal reaching the network side device 13. The intelligent signal amplifier 12 may be controlled by the network side device 13, that is, the network side device 13 may control a sending parameter of the intelligent signal amplifier 12, such as a switch and a sending beam of the intelligent signal amplifier 12, to improve the signal power of the intelligent signal amplifier 12 and reduce the interference.

The signal/channel that needs to be amplified by the intelligent signal amplifier 12 includes:
a cell discovery signal (for example, a primary synchronization signal (Primary Synchronization Signal, PSS), a secondary synchronization signal (Secondary Synchronization Signal, SSS), and a master information block (Master Information Block, MIB));
a physical downlink control channel (Physical downlink control channel, PDCCH) and a physical downlink shared channel (Physical downlink shared channel, PDSCH) that are used to send information to the UE;
a PDCCH and a PDSCH that are used to send a broadcast message;
a physical random access channel (Physical Random Access Channel, PRACH); and
a physical uplink control channel (Physical Uplink Control Channel, PUCCH) and a physical uplink shared channel (Physical Uplink Shared Channel, PUSCH) that are used to send information to the network side device.

For example, the intelligent signal amplifier includes a mobile termination (Mobile Termination, MT) module and a radio unit (Radio Unit, RU) module. The MT is used to establish a connection to the network side device 13. The network side device 13 interacts with the intelligent signal amplifier 12 through the MT, and can configure an operating parameter of the intelligent signal amplifier 12.

For example, the terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a smart watch, a bracelet, a headset, glasses, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

The following describes technical terms involved in the technical solution provided in the embodiments of this application:
1). 4-step random access (4-step RACH)

4-step RACH between the terminal device and the network side device is used as an example, and 4-step RACH (that is, referring to a common RACH procedure in the prior art) usually includes the following five steps.

Step 1: The terminal device sends Msg1 (random access preamble) to the network side device.

Step 2: After receiving Msgl, the network side device may send Msg2 to the terminal device. To be specific, a random access response (Random Access Response, RAR) message, where the RAR is scrambled with a random access radio network temporary identity (Random Access Radio Network Temporary Identity, RA-RNTI) and includes a backoff indicator (Backoff Indicator, BI), an uplink grant (Uplink grant, UL grant), random access preamble identification (Random Access preamble Identification, RAPID), a temple cell radio network temporary identity (Temple Cell Radio Network Temporary Identity, TC-RNTI), and the like.

Step 3: The terminal device that detects the RAPID corresponding to the preamble sent by the terminal device sends Msg3 based on a location of the UL grant (the terminal device that does not detect the RAPID corresponding to the preamble sent by the terminal device uses the BI to delay access).

Step 4: The terminal device receives Msg4 sent by the network side device, where Msg4 includes a contention resolution identity, and upgrades the TC-RNTI to a cell radio network temporary identity (Cell Radio Network Temporary Identity, C-RNTI), and the network side can use the C-RNTI to schedule the terminal device subsequently.

Step 5: Generally, the terminal device needs to send Msg5. To be specific, an access complete message.

It should be noted that the four-step access mainly refers to the process of contention resolution completion in the first four steps, and the first four steps usually represent a random access procedure of a conventional wireless network.

### 2). 2-step random access (2-step RACH)

2-step RACH between the terminal device and the network side device is used as an example, and 2-step RACH specifically includes the following two steps.

Step 1: The terminal device triggers a 2-step RACH procedure, to send the request information (MsgA) to the network side device. For example, sending through preamble+PUSCH.

Step 2: The network side device sends acknowledgement information (MsgB) to the terminal device.

If the terminal device fails to receive MsgB (failure refers to that the RAPID or the contention resolution ID in the MsgA sent by the UE is not received), the terminal device resends Msg1 (or MsgA or Msg3).

Conventionally, for ease of understanding, MsgA in 2-step includes Msg1 and Msg3 in 4-step, and MsgB in 2-step includes Msg2 and Msg4 in 4-step.

With reference to the accompanying drawings, an operating parameter configuration method provided in the embodiments of this application is described in detail by using some embodiments and application scenarios thereof.

FIG. 2 is a schematic flowchart of an operating parameter configuration method according to an embodiment of this application. As shown in FIG. 2, the operating parameter configuration method may include the following steps.

Step 201: A network side device sends a first broadcast message.

Step 202: An intelligent signal amplifier receives a first broadcast message from a network side device.

Step 203: The intelligent signal amplifier initiates target random access based on the first broadcast information.

Step 204: The network side device sends the operating parameter to the intelligent signal amplifier after successfully accessing the intelligent signal amplifier.

Step 205: The intelligent signal amplifier receives the operating parameter from the network side device after the target random access is successful.

In this embodiment of this application, the first broadcast message is configured to indicate that the intelligent signal amplifier is supported to access the network side device.

In this embodiment of this application, the first broadcast message includes at least one of the following: indication information indicating that access of the intelligent signal amplifier is supported; cell information of a cell that supports access of the intelligent signal amplifier; a random access configuration applied to the intelligent signal amplifier; and wireless backhaul message indication, where the wireless backhaul message indication is configured to indicate that the network side device supports the access of the intelligent signal amplifier.

For example, the indication information indicating that access of the intelligent signal amplifier is supported includes: indicating that the cell sending the first broadcast message can support the access of the intelligent signal amplifier and can support a carrier frequency for receiving and forwarding a signal by the intelligent signal amplifier.

For example, the cell information of a cell that supports access of the intelligent signal amplifier includes a cell identifier (Identifier, ID) and a carrier frequency, where the cell ID may be a physical cell identifier (Physical Cell Identifier, PCI).

For example, the random access configuration applied to the intelligent signal amplifier includes an access format and an access occasion.

In this embodiment of this application, the target random access includes 2-step random access or 4-step random access.

In this embodiment of this application, the target random access is initiated based on the first broadcast message, which can prevent the intelligent signal amplifier from accessing the cell not supporting control of the intelligent signal amplifier, and cannot play a function of the intelligent signal amplifier.

In this embodiment of this application, the operating parameter includes an operating carrier and bandwidth, transmit power configuration, and a beam configuration. It should be noted that the network side device may send the operating parameter at the request of the intelligent signal amplifier, or may also send the operating parameter to the intelligent signal amplifier actively.

In this embodiment of this application, after receiving the operating parameter, the intelligent signal amplifier is configured based on the operating parameter, and in a subsequent signal forwarding process, an uplink signal or a downlink signal is sent based on the operating parameter.

In the operating parameter configuration method provided in this embodiment of this application, the first broadcast message sent by the network side device is received by the intelligent signal amplifier, and whether the network side device supports access of the intelligent signal amplifier is determined through the first broadcast message, so that the intelligent signal amplifier amplifies only the signal sent by the network side device that supports signal amplification. In this way, the intelligent signal amplifier amplifies only the signal that needs to be amplified, and effectiveness of intelligent signal amplification is improved. Moreover, the intelligent signal amplifier initiates target random access based on the first broadcast message, and finally, after the target random access is successful, the intelligent signal amplifier receives the operating parameter from the network side device, so that the intelligent signal amplifier amplifies and forwards uplink and downlink signals with an appropriate operating parameter.

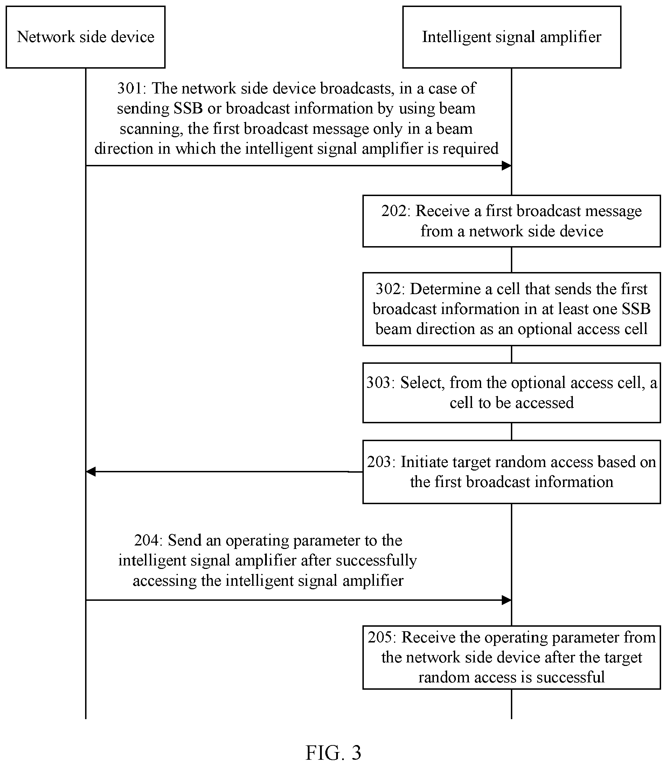

Optionally, in this embodiment of this application, as shown in FIG. 3, before step 202, the operating parameter configuration method provided in this embodiment of this application further includes the following steps.

Step 301: The network side device broadcasts, in a case of sending SSB or broadcast information through beam scanning, the first broadcast message only in a beam direction in which the intelligent signal amplifier is required.

Further, as shown in FIG. 3, before step 203, the operating parameter configuration method provided in this embodiment of this application further includes the following steps.

Step 302: The intelligent signal amplifier determines a cell that sends the first broadcast information in at least one SSB beam direction as an optional access cell.

Step 303: The intelligent signal amplifier selects, from the optional access cell, a cell to be accessed.

Further, optionally, in this embodiment of this application, the network side device determines, based on whether there is interference in the cell the network side device covers, the target beam direction in which the intelligent signal amplifier is required, and then broadcasts the first broadcast message in the target beam direction in a case of sending the SSB or broadcast information through beam scanning.

Further, optionally, in this embodiment of this application, in a process that the intelligent signal amplifier determines the optional access cell, the intelligent signal amplifier ignores a permission parameter of the cell, where the permission parameter includes at least one of the following: cellBarred, cellReservedForOtherUSe, cellReservedForFutureUse, and cellReservedForOperatorUse.

It should be noted that the permission parameter of the cell is used to prevent common user equipment from directly accessing the network side device, and the intelligent signal amplifier ignores the permission parameter, so that the intelligent signal amplifier will not be unable to access the network side device because the intelligent signal amplifier does not initiate the target random access due to limitation of the permission parameter.

Further, optionally, after selecting the cell to be accessed, the intelligent signal amplifier initiates, based on the first broadcast message corresponding to the cell to be accessed, target random access to the network side device corresponding to the cell to be accessed.

In this way, the intelligent signal amplifier can access a network side device that needs signal amplification, and the network side device supports access of the intelligent signal amplifier, so that the intelligent signal amplifier can play functions of amplifying and forwarding signals.

Optionally, in this embodiment of this application, in order to enable the intelligent signal amplifier to be configured based on the operating parameter, in step 204, after the network side device successfully accesses the intelligent signal amplifier and before the network side device sends the operating parameter, the intelligent signal amplifier can also actively request the network side device to send the operating parameter.

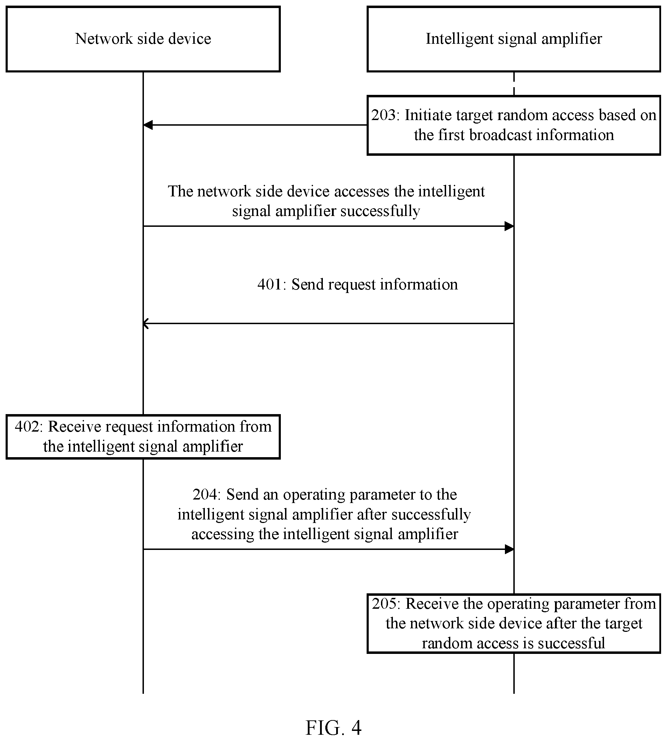

For example, as shown in FIG. 4, the operating parameter configuration method provided in this embodiment of this application further includes step 401 and step 402.

Step 401: An intelligent signal amplifier sends request information to a network side device.

Step 402: The network side device receives request information from the intelligent signal amplifier.

In this embodiment of this application, the request information is configured to request the network side device to configure the operating parameter for the intelligent signal amplifier, and the request information carries capability parameter information. It should be noted that the capability parameter information refers to a configurable operating parameter range of the intelligent signal amplifier.

In this embodiment of this application, the capability parameter information includes a parameter related to at least one of the following: a carrier, a bandwidth, transmit power, an uplink and downlink slot symbol configuration, and an antenna configuration.

In this embodiment of this application, after receiving the request information, the network side device may determine the operating parameter of the intelligent signal amplifier based on the capability parameter information in the request information.

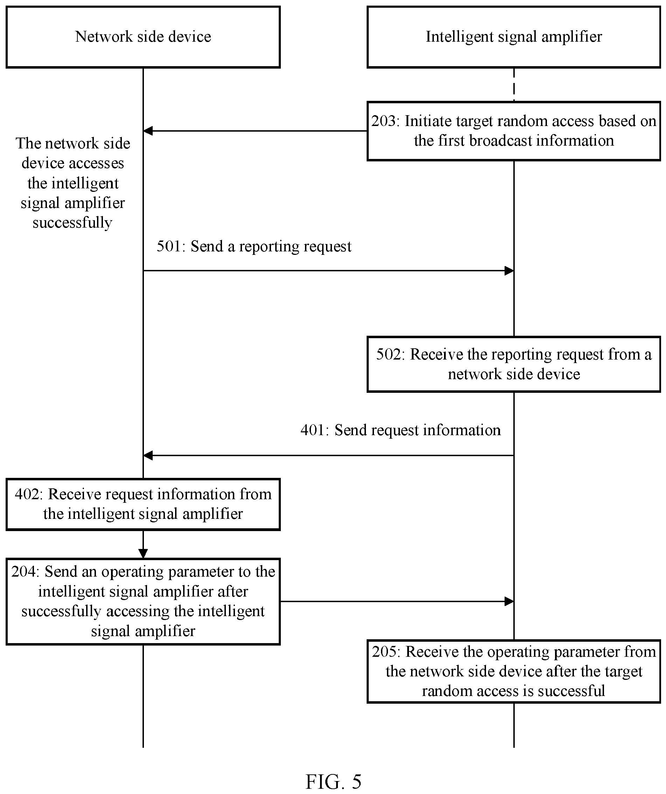

Further, optionally, in this embodiment of this application, before step 401, as shown in FIG. 5, the operating parameter configuration method provided in this embodiment of this application further includes step 501 and step 502.

Step 501: The network side device sends a reporting request to the intelligent signal amplifier.

Step 502: The intelligent signal amplifier receives the reporting request from the network side device.

In this embodiment of this application, the reporting request is configured to request the intelligent signal amplifier to report capability parameter information.

In this embodiment of this application, after receiving the reporting request, the intelligent signal amplifier can respond to the reporting request and send request information to the network side device, where the request information is configured to request the network side device to configure the operating parameter for the intelligent signal amplifier.

In this embodiment of this application, the request information sent by the intelligent signal amplifier can also carry capability parameter information.

In this way, through the request information reported by the intelligent signal amplifier or the request information reported by the intelligent signal amplifier in response to the reporting request sent by the network side device, the network side device can obtain the capability parameter information of the intelligent signal amplifier based on the request information, so that the network side device can learn of access and performance of the intelligent signal amplifier, and further, the network side device can be configured with an appropriate operating parameter to control the intelligent signal amplifier to amplify and forward the uplink and downlink signals.

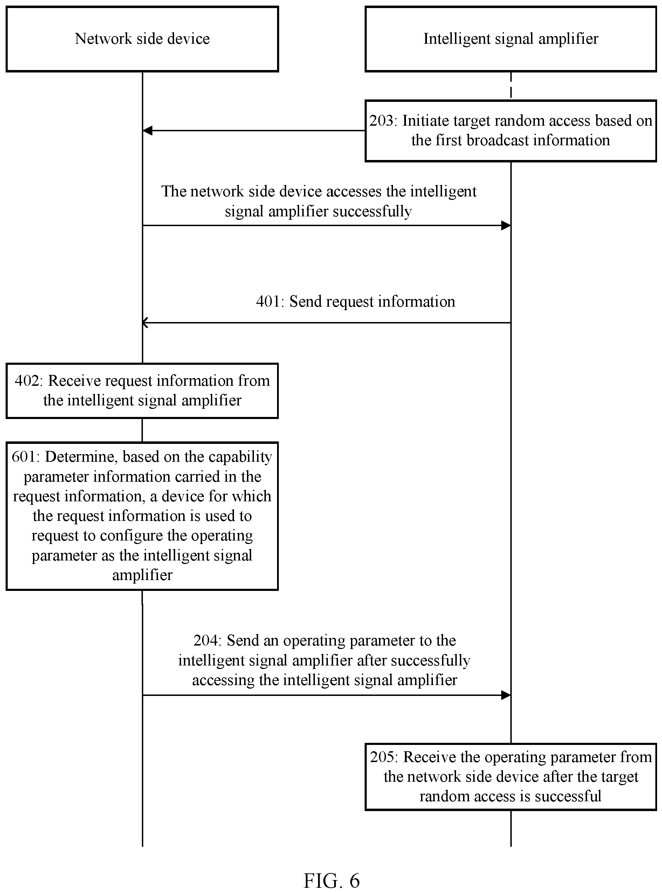

Optionally, in this embodiment of this application, before step 204, as shown in FIG. 6, the operating parameter configuration method provided in this embodiment of this application further includes step 601.

Step 601: The network side device determines, based on the capability parameter information carried in the request information, a device for which the request information is configured to request to configure the operating parameter as the intelligent signal amplifier.

In this way, the network side device can determine that the currently accessed device is the intelligent signal amplifier, to prompt the network side device to configure the operating parameter of the intelligent signal amplifier based on an actual signal transmission situation.

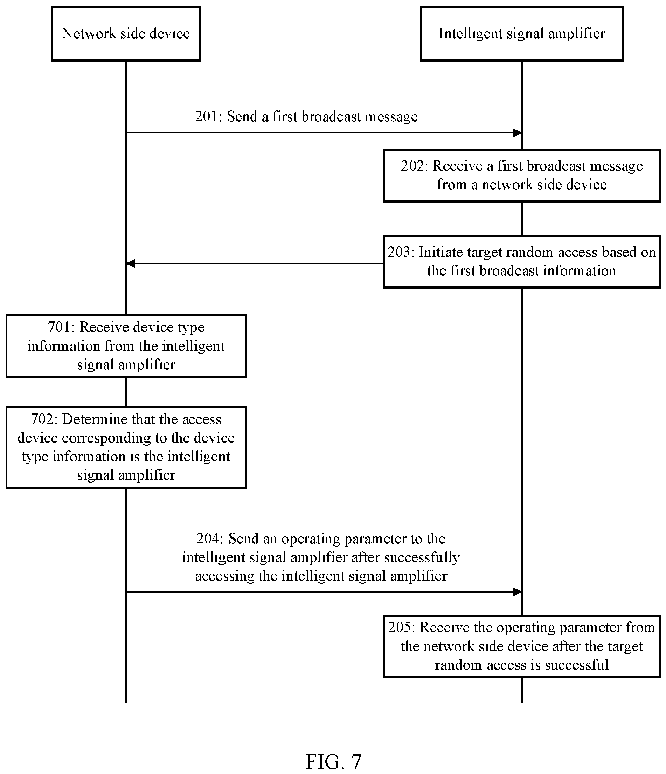

Optionally, in this embodiment of this application, in parallel with step 601, before step 204, as shown in FIG. 7, the operating parameter configuration method provided in this embodiment of this application further includes step 701 and step 702.

Step 701: The network side device receives device type information from the intelligent signal amplifier.

Step 702: The network side device determines that the access device corresponding to the device type information is the intelligent signal amplifier.

In this embodiment of this application, the device type information is configured to identify a device type of an access device that initiates the target random access.

Further, optionally, in this embodiment of this application, step 701 may be implemented through step 801, step 802, or step 803.

Step 801: The intelligent signal amplifier sends device type information in MsgA-PUSCH or RRCSetupComplete in a procedure of initiating the 2-step random access.

Step 802: The intelligent signal amplifier sends the device type information in Msg3 or RRCSetupComplete in a procedure of initiating the 4-step random access.

Step 803: The intelligent signal amplifier reports, after the target random access is successful, device type information to the network side device through user equipment (UE) assistance information or another RRC message.

In this embodiment of this application, the device type information is configured to identify a device type of an access device that initiates the target random access.

It should be noted that the network side device may determine a relevant parameter of the intelligent signal amplifier based on the device type information, such as whether to support access, capability parameter information, a receivable signal frequency, and the like.

In this embodiment of this application, the intelligent signal amplifier may send the device type information in the procedure of initiating the target random access, and the intelligent signal amplifier may also send the device type information after the target random access is successful.

In this way, the network side device can determine that the currently accessed device is the intelligent signal amplifier, to prompt the network side device to configure the operating parameter of the intelligent signal amplifier based on an actual signal transmission situation.

It should be noted that an execution subject of the operating parameter configuration method provided in this embodiment of this application may be an operating parameter configuration apparatus, or a control module in the operating parameter configuration apparatus for executing the operating parameter configuration method. In this embodiment of this application, an example in which the operating parameter configuration method is implemented by the operating parameter configuration apparatus is used to describe the operating parameter configuration apparatus provided in this embodiment of this application.

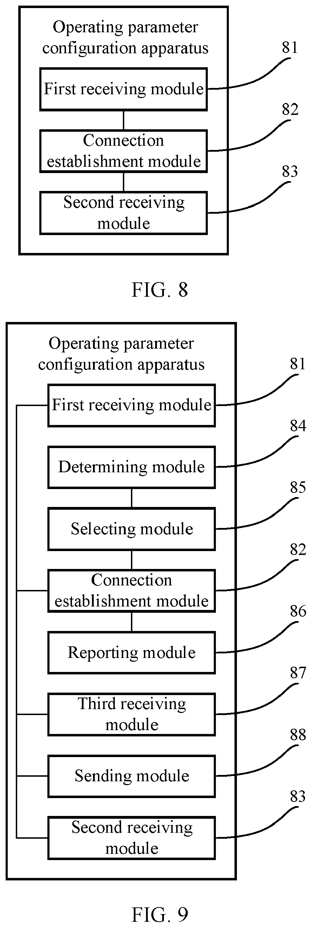

An embodiment of this application provides an operating parameter configuration apparatus. As shown in FIG. 8, the operating parameter configuration apparatus includes a first receiving module 81, a connection establishment module 82, and a second receiving module 83; and
the first receiving module 81 is configured to receive a first broadcast message from a network side device, where the first broadcast message is configured to indicate that an intelligent signal amplifier is supported to access the network side device; the connection establishment module 82 is configured to initiate target random access based on the first broadcast information received by the first receiving module 81; and the second receiving module 83 is configured to receive an operating parameter from the network side device after the target random access initiated by the connection establishment module 82 is successful, where the target random access includes 2-step random access or 4-step random access.

Optionally, the first broadcast message includes at least one of the following: indication information indicating that access of the intelligent signal amplifier is supported; cell information of a cell that supports access of the intelligent signal amplifier; a random access configuration applied to the intelligent signal amplifier; and wireless backhaul message indication, where the wireless backhaul message indication is configured to indicate that the network side device supports the access of the intelligent signal amplifier.

Optionally, as shown in FIG. 9, the apparatus further includes a determining module 84 and a selecting module 85; and
the determining module 84 is configured to determine a cell that sends the first broadcast information in at least one SSB beam direction as an optional access cell; and the selecting module 85 is configured to select, from the optional access cell determined by the determining module 84, a cell to be accessed.

Optionally, the determining module 84 is specifically configured to ignore a permission parameter of the cell, and the permission parameter includes at least one of the following: cellBarred, cellReservedForOtherUSe, cellReservedForFutureUse, and cellReservedForOperatorUse.

Optionally, the connection establishment module 82 is configured to: send device type information in MsgA-PUSCH or RRCSetupComplete in a procedure of initiating the 2-step random access; and send the device type information in Msg3 or RRCSetupComplete in a procedure of initiating the 4-step random access, where the device type information is configured to identify a device type of an access device that initiates the target random access.

Optionally, as shown in FIG. 9, the apparatus further includes a reporting module 86; and
the reporting module 86 is configured to report: after the target random access initiated by the connection establishment module 82 is successful, device type information to the network side device through user equipment (UE) assistance information or another RRC message, where the device type information is configured to identify a device type of an access device that initiates the target random access.

Optionally, as shown in FIG. 9, the apparatus further includes a third receiving module 87; and
the third receiving module 87 is configured to receive a reporting request from the network side device, where the reporting request is configured to request the intelligent signal amplifier to report capability parameter information.

Optionally, as shown in FIG. 9, the apparatus further includes a sending module 88; and
the sending module 88 is configured to send, after the target random access initiated by the connection establishment module 82 is successful, request information to the network side device, where the request information is configured to request the network side device to configure an operating parameter for the intelligent signal amplifier, and the request information carries capability parameter information.

Optionally, the capability parameter information includes a parameter related to at least one of the following: a carrier, a bandwidth, transmit power, an uplink and downlink slot symbol configuration, and an antenna configuration.

In the operating parameter configuration apparatus provided in this embodiment of this application, the first broadcast message sent by the network side device is received by the intelligent signal amplifier, and whether the network side device supports access of the intelligent signal amplifier is determined through the first broadcast message, so that the intelligent signal amplifier amplifies only the signal sent by the network side device that supports signal amplification. In this way, the intelligent signal amplifier amplifies only the signal that needs to be amplified, and effectiveness of intelligent signal amplification is improved. Moreover, the intelligent signal amplifier initiates target random access based on the first broadcast message, and finally, after the target random access is successful, the intelligent signal amplifier receives the operating parameter from the network side device, so that the intelligent signal amplifier amplifies and forwards uplink and downlink signals with an appropriate operating parameter.

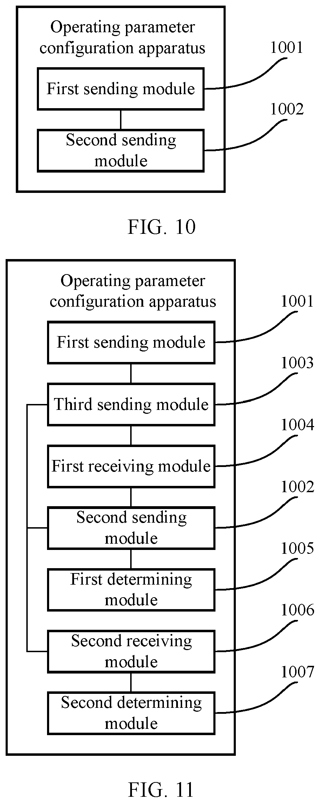

An embodiment of this application provides an operating parameter configuration apparatus. As shown in FIG. 10, the operating parameter configuration apparatus includes a first sending module 1001 and a second sending module 1002; and
the first sending module 1001 is configured to send a first broadcast message, where the first broadcast message is configured to indicate that an intelligent signal amplifier is supported to access the network side device; and the second sending module 1002 is configured to send the operating parameter to the intelligent signal amplifier after successfully accessing the intelligent signal amplifier.

Optionally, the first sending module 1001 is specifically configured to broadcast, in a case of sending SSB or broadcast information through beam scanning, the first broadcast message only in a beam direction in which the intelligent signal amplifier is required.

Optionally, as shown in FIG. 11, the apparatus further includes a third sending module 1003; and
the third sending module 1003 is configured to send a reporting request to the intelligent signal amplifier after successfully accessing the intelligent signal amplifier, where the reporting request is configured to request the intelligent signal amplifier to report capability parameter information.

Optionally, as shown in FIG. 11, the apparatus further includes a first receiving module 1004; and
the first receiving module 1004 is configured to receive, before the second sending module 1002 sends the operating parameter to the intelligent signal amplifier, request information from the intelligent signal amplifier, where the request information is configured to request the network side device to configure an operating parameter for the intelligent signal amplifier, and the request information carries capability parameter information.

Optionally, as shown in FIG. 11, the apparatus further includes a first determining module 1005; and
the first determining module 1005 is configured to: before the second sending module 1002 sends the operating parameter to the intelligent signal amplifier, determine, based on the capability parameter information carried in the request information, a device for which the request information is configured to request to configure the operating parameter as the intelligent signal amplifier.

Optionally, as shown in FIG. 11, the apparatus further includes a second receiving module 1006 and a second determining module 1007;
the second receiving module 1006 is configured to: before the second sending module 1002 sends the operating parameter to the intelligent signal amplifier, receive device type information from the intelligent signal amplifier, where the device type information is configured to identify a device type of an access device that initiates the target random access; and
the second determining module 1007 is configured to determine that the access device corresponding to the device type information received by the second receiving module 1006 is the intelligent signal amplifier.

Optionally, the capability parameter information includes a parameter related to at least one of the following: a carrier, a bandwidth, transmit power, an uplink and downlink slot symbol configuration, and an antenna configuration.

In the operating parameter configuration apparatus provided in this embodiment of this application, the first broadcast message sent by the network side device is received by the intelligent signal amplifier, and whether the network side device supports access of the intelligent signal amplifier is determined through the first broadcast message, so that the intelligent signal amplifier amplifies only the signal sent by the network side device that supports signal amplification. In this way, the intelligent signal amplifier amplifies only the signal that needs to be amplified, and effectiveness of intelligent signal amplification is improved. Moreover, the intelligent signal amplifier initiates target random access based on the first broadcast message, and finally, after the target random access is successful, the intelligent signal amplifier receives the operating parameter from the network side device, so that the intelligent signal amplifier amplifies and forwards uplink and downlink signals with an appropriate operating parameter.

The operating parameter configuration apparatus in this embodiment of this application may be an apparatus, an apparatus or electronic device with an operating system, or may be a component, an integrated circuit, or a chip in an electronic device.

The operating parameter configuration apparatus provided in this embodiment of this application can implement the processes implemented in the method embodiments from FIG. 2 to FIG. 7, and a same technical effect can be achieved. To avoid repetition, details are not described herein again.

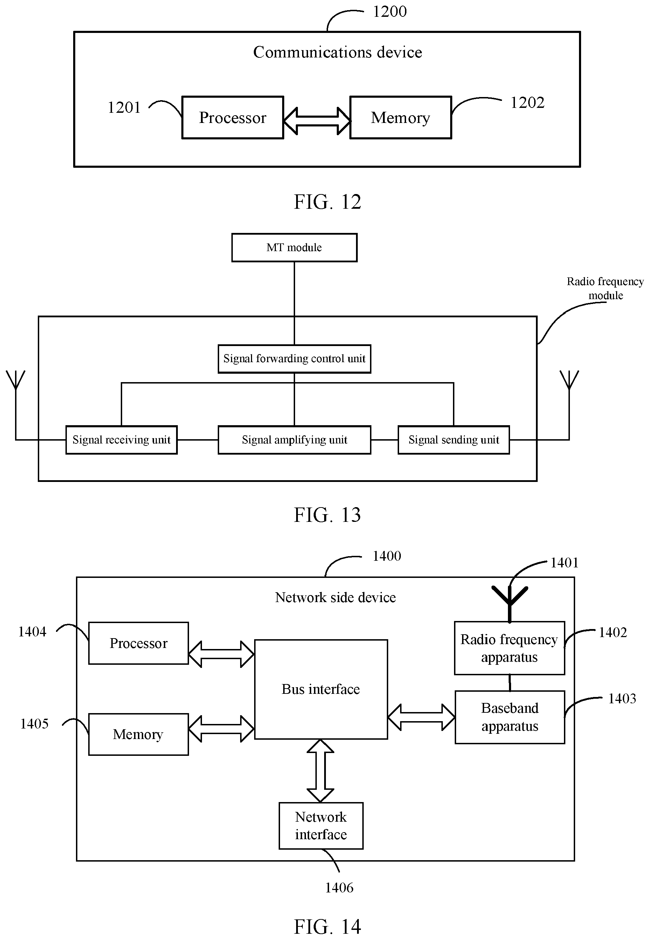

Optionally, as shown in FIG. 12, an embodiment of this application further provides a communications device 1200, including a processor 1201, a memory 1202, and a program or an instruction stored in the memory 1202 and executable on the processor 1201. For example, in a case that the communications device 1200 is an intelligent signal amplifier, when the program or the instruction is executed by the processor 1201, each process of the operating parameter configuration method embodiment is implemented, and a same technical effect can be achieved. In a case that the communications device 1200 is a network side device, when the program or the instruction is executed by the processor 1201, each process of the operating parameter configuration method embodiment is performed, and a same technical effect can be achieved. To avoid repetition, details are not repeated herein again.

An embodiment of this application further provides an intelligent signal amplifier, including a processor and a communications interface, where the processor is configured to: receive a first broadcast message from a network side device, where the first broadcast message is configured to indicate that the intelligent signal amplifier is supported to access the network side device; initiate target random access based on the first broadcast information; and receive an operating parameter from the network side device after the target random access is successful, where the target random access includes 2-step random access or 4-step random access. This terminal embodiment corresponds to the foregoing method embodiment on the terminal side. Each implementation process and implementation of the foregoing method embodiment may be applicable to this terminal embodiment, and a same technical effect can be achieved.

Specifically, an embodiment of this application further provides an intelligent signal amplifier, and as shown in FIG. 13, the intelligent signal amplifier includes an MT module and an RU unit module, where the RU unit includes a signal forwarding control unit, a signal receiving unit, a signal amplifying unit, and a signal sending unit.

An embodiment of this application further provides an intelligent signal amplifier, and as shown in FIG. 13, the intelligent signal amplifier includes an MT module and a radio unit, where the radio unit includes a signal forwarding control unit, a signal receiving unit, a signal amplifying unit, and a signal sending unit.

The MT module is configured to: receive a first broadcast message from a network side device, where the first broadcast message is configured to indicate that the intelligent signal amplifier is supported to access the network side device; the signal forwarding control unit is configured to initiate target random access based on the first broadcast information; and the MT module is further configured to receive an operating parameter from the network side device after the target random access is successful, where the target random access includes 2-step random access or 4-step random access.

Optionally, the first broadcast message includes at least one of the following: indication information indicating that access of the intelligent signal amplifier is supported; cell information of a cell that supports access of the intelligent signal amplifier; a random access configuration applied to the intelligent signal amplifier; and wireless backhaul message indication, where the wireless backhaul message indication is configured to indicate that the network side device supports the access of the intelligent signal amplifier.

Optionally, the signal forwarding control unit is further configured to: determine a cell that sends the first broadcast information in at least one SSB beam direction as an optional access cell; and select, from the optional access cell, a cell to be accessed.

Optionally, the signal forwarding control unit is further configured to: before determining a cell that sends the first broadcast information in at least one SSB beam direction as an optional access cell, ignore a permission parameter of the cell, and the permission parameter includes at least one of the following: cellBarred, cellReservedForOtherUSe, cellReservedForFutureUse, and cellReservedForOperatorUse.

Optionally, the signal forwarding control unit is configured to: send device type information in MsgA-PUSCH or RRCSetupComplete in a procedure of initiating the 2-step random access; and send the device type information in Msg3 or RRCSetupComplete in a procedure of initiating the 4-step random access, where the device type information is configured to identify a device type of an access device that initiates the target random access.

Optionally, the signal forwarding control unit is configured to report: after the target random access is successful, device type information to the network side device through user equipment (UE) assistance information or another RRC message, where the device type information is configured to identify a device type of an access device that initiates the target random access.

Optionally, the MT module is further configured to receive a reporting request from the network side device, where the reporting request is configured to request the intelligent signal amplifier to report capability parameter information.

Optionally, the MT module is further configured to send, after the target random access is successful, request information to the network side device, where the request information is configured to request the network side device to configure an operating parameter for the intelligent signal amplifier, and the request information carries capability parameter information.

Optionally, the capability parameter information includes a parameter related to at least one of the following: a carrier, a bandwidth, transmit power, an uplink and downlink slot symbol configuration, and an antenna configuration.

In the intelligent signal amplifier provided in this embodiment of this application, the first broadcast message sent by the network side device is received by the intelligent signal amplifier, and whether the network side device supports access of the intelligent signal amplifier is determined through the first broadcast message, so that the intelligent signal amplifier amplifies only the signal sent by the network side device that supports signal amplification. In this way, the intelligent signal amplifier amplifies only the signal that needs to be amplified, and effectiveness of intelligent signal amplification is improved. Moreover, the intelligent signal amplifier initiates target random access based on the first broadcast message, and finally, after the target random access is successful, the intelligent signal amplifier receives the operating parameter from the network side device, so that the intelligent signal amplifier amplifies and forwards uplink and downlink signals with an appropriate operating parameter.

An embodiment of this application further provides a network side device, including a processor and a communications interface, where the processor is configured to: send a first broadcast message, where the first broadcast message is configured to indicate that an intelligent signal amplifier is supported to access the network side device; and send the operating parameter to the intelligent signal amplifier after successfully accessing the intelligent signal amplifier. This network side device embodiment is corresponding to the foregoing method embodiment of the network side device. Each implementation process and implementation of the foregoing method embodiment may be applicable to this network side device embodiment, and a same technical effect can be achieved.

Specifically, an embodiment of this application further provides a network side device. As shown in FIG. 14, the network side device 1400 includes an antenna 1401, a radio frequency apparatus 1402, and a baseband apparatus 1403, where the antenna 1401 is connected to the radio frequency apparatus 1402. In an uplink direction, the radio frequency apparatus 1402 receives information through the antenna 1401, and sends the received information to the baseband apparatus 1403 for processing. In a downlink direction, the baseband apparatus 1403 processes information that needs to be sent, and sends processed information to the radio frequency apparatus 1402. The radio frequency apparatus 1402 processes the received information, and sends processed information through the antenna 1401.

The frequency band processing apparatus may be located in the baseband apparatus 1403. The method performed by the network side device in the foregoing embodiment may be implemented in the baseband apparatus 1403. The baseband apparatus 1403 includes a processor 1404 and a memory 1405.

The baseband apparatus 1403 may include, for example, at least one baseband board, where a plurality of chips are disposed on the baseband board. As shown in FIG. 14, one chip is, for example, the processor 1404, which is connected to the memory 1405, so as to invoke a program in the memory 1405 to perform operations of the network side device shown in the foregoing method embodiment.

The baseband apparatus 1403 may further include a network interface 1406, configured to exchange information with the radio frequency apparatus 1402. For example, the interface is a common public radio interface (Common Public Radio Interface, CPRI for short).

Specifically, the network side device in this embodiment of the present invention further includes an instruction or a program that is stored in the memory 1405 and that can be run on the processor 1404. The processor 1404 invokes the instruction or the program in the memory 1405 to perform the method performed by the modules shown in FIG. 12, and a same technical effect is achieved. To avoid repetition, details are not described herein again.

An embodiment of this application further provides a readable storage medium. The readable storage medium stores a program or an instruction. When the program or the instruction is executed by a processor, the processes of the foregoing operating parameter configuration method embodiments are implemented, and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to run a program or an instruction to implement the processes of the foregoing operating parameter configuration method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An operating parameter configuration method, wherein the method comprises:
receiving, by an intelligent signal amplifier, a first broadcast message from a network side device, wherein the first broadcast message is configured to indicate that the intelligent signal amplifier is supported to access the network side device;
initiating, by the intelligent signal amplifier, target random access based on the first broadcast information; and
receiving, by the intelligent signal amplifier, an operating parameter from the network side device after the target random access is successful, wherein
the target random access comprises 2-step random access or 4-step random access.

2. The method according to claim 1, wherein the first broadcast message comprises at least one of following:
indication information indicating that access of the intelligent signal amplifier is supported;
cell information of a cell that supports access of the intelligent signal amplifier;
a random access configuration applied to the intelligent signal amplifier; and
wireless backhaul message indication, wherein
the wireless backhaul message indication is configured to indicate that the network side device supports the access of the intelligent signal amplifier.

3. The method according to claim 1, wherein the method further comprises:
determining, by the intelligent signal amplifier, a cell that sends the first broadcast information in at least one SSB beam direction as an optional access cell; and
selecting, by the intelligent signal amplifier from the optional access cell, a cell to be accessed.

4. The method according to claim 3, wherein the determining, by the intelligent signal amplifier, a cell that sends the first broadcast information in at least one SSB beam direction as an optional access cell comprises:
ignoring, by the intelligent signal amplifier, a permission parameter of the cell, wherein the permission parameter comprises at least one of following: cellBarred, cellReservedForOtherUSe, cellReservedForFutureUse, and cellReservedForOperatorUse.

5. The method according to claim 1, wherein the initiating, by the intelligent signal amplifier, target random access based on the first broadcast information comprises:
sending, by the intelligent signal amplifier, device type information in MsgA-PUSCH or RRCSetupComplete in a procedure of initiating the 2-step random access; and
sending, by the intelligent signal amplifier, the device type information in Msg3 or RRCSetupComplete in a procedure of initiating the 4-step random access, wherein
the device type information is configured to identify a device type of an access device that initiates the target random access.

6. The method according to claim 1, wherein after the initiating, by the intelligent signal amplifier, target random access based on the first broadcast information, the method further comprises:
reporting, by the intelligent signal amplifier after the target random access is successful, device type information to the network side device through user equipment (UE) assistance information or another RRC message, wherein
the device type information is configured to identify a device type of an access device that initiates the target random access.

7. The method according to claim 1, wherein the method further comprises:
receiving, by the intelligent signal amplifier, a reporting request from the network side device, wherein the reporting request is configured to request the intelligent signal amplifier to report capability parameter information.

8. The method according to claim 1 or 7, wherein after the target random access is successful, the method further comprises:
sending, by the intelligent signal amplifier, request information to the network side device, wherein the request information is configured to request the network side device to configure an operating parameter for the intelligent signal amplifier.

9. The method according to claim 7, wherein the capability parameter information comprises a parameter related to at least one of following: a carrier, a bandwidth, transmit power, an uplink and downlink slot symbol configuration, and an antenna configuration.

10. An operating parameter configuration method, wherein the method comprises:
sending, by a network side device, a first broadcast message, wherein the first broadcast message is configured to indicate that an intelligent signal amplifier is supported to access the network side device; and
sending, by the network side device, an operating parameter to the intelligent signal amplifier after successfully accessing the intelligent signal amplifier.

11. The method according to claim 10, wherein the sending, by a network side device, a first broadcast message comprises:
broadcasting, by the network side device in a case of sending SSB or broadcast information through beam scanning, the first broadcast message only in a beam direction in which the intelligent signal amplifier is required.

12. The method according to claim 10, wherein after the network side device successfully access the intelligent signal amplifier, the method further comprises:
sending, by the network side device, a reporting request to the intelligent signal amplifier, wherein the reporting request is configured to request the intelligent signal amplifier to report capability parameter information.

13. The method according to any one of claims 10 to 12, wherein before the sending, by the network side device, the operating parameter to the intelligent signal amplifier, the method further comprises:
receiving, by the network side device, request information from the intelligent signal amplifier, wherein the request information is configured to request the network side device to configure an operating parameter for the intelligent signal amplifier.

14. The method according to claim 13, wherein before the sending, by the network side device, the operating parameter to the intelligent signal amplifier, the method further comprises:
determining, by the network side device based on a received capability parameter information, a device for which the request information is configured to request configuration of the operating parameter as the intelligent signal amplifier.

15. The method according to claim 10, wherein before the sending, by the network side device, the operating parameter to the intelligent signal amplifier, the method further comprises:
receiving, by the network side device, device type information from the intelligent signal amplifier, wherein the device type information is configured to identify a device type of an access device that initiates the target random access; and
determining, by the network side device, an access device corresponding to the device type information as the intelligent signal amplifier.

16. The method according to claim 12, wherein the capability parameter information comprises a parameter related to at least one of following: a carrier, a bandwidth, transmit power, an uplink and downlink slot symbol configuration, and an antenna configuration.

17. An operating parameter configuration apparatus, wherein the apparatus comprises a first receiving module, a connection establishment module, and a second receiving module;
the first receiving module is configured to receive a first broadcast message from a network side device, wherein the first broadcast message is configured to indicate that an intelligent signal amplifier is supported to access the network side device;
the connection establishment module is configured to initiate target random access based on the first broadcast information received by the first receiving module; and
the second receiving module is configured to receive an operating parameter from the network side device after the target random access initiated by the connection establishment module is successful, wherein
the target random access comprises 2-step random access or 4-step random access.

18. The apparatus according to claim 17, wherein the first broadcast message comprises at least one of following:
indication information indicating that access of the intelligent signal amplifier is supported;
cell information of a cell that supports access of the intelligent signal amplifier;
a random access configuration applied to the intelligent signal amplifier; and
wireless backhaul message indication, wherein
the wireless backhaul message indication is configured to indicate that the network side device supports the access of the intelligent signal amplifier.

19. The apparatus according to claim 17, wherein the apparatus further comprises a determining module and a selecting module, wherein
the determining module is configured to determine a cell that sends the first broadcast information in at least one SSB beam direction as an optional access cell; and
the selecting module is configured to select, from the optional access cell determined by the determining module, a cell to be accessed.

20. The apparatus according to claim 19, wherein the determining module is specifically configured to ignore a permission parameter of the cell, and the permission parameter comprises at least one of following: cellBarred, cellReservedForOtherUSe, cellReservedForFutureUse, and cellReservedForOperatorUse.

21. The apparatus according to claim 17, wherein the connection establishment module is configured to:
send device type information in MsgA-PUSCH or RRCSetupComplete in a procedure of initiating the 2-step random access; and
send the device type information in Msg3 or RRCSetupComplete in a procedure of initiating the 4-step random access, wherein
the device type information is configured to identify a device type of an access device that initiates the target random access.

22. The apparatus according to claim 17, wherein the apparatus further comprises a reporting module; and
the reporting module is configured to report: after the target random access initiated by the connection establishment module is successful, device type information to the network side device through user equipment (UE) assistance information or another RRC message, wherein
the device type information is configured to identify a device type of an access device that initiates the target random access.

23. The apparatus according to claim 17, wherein the apparatus further comprises a third receiving module, wherein
the third receiving module is configured to receive a reporting request from the network side device, wherein the reporting request is configured to request the intelligent signal amplifier to report capability parameter information.

24. The apparatus according to claim 17 or 23, wherein the apparatus further comprises a sending module; and
the sending module is configured to send, after the target random access initiated by the connection establishment module is successful, request information to the network side device, wherein the request information is configured to request the network side device to configure an operating parameter for the intelligent signal amplifier.

25. The apparatus according to claim 24, wherein the capability parameter information comprises a parameter related to at least one of the following: a carrier, a bandwidth, transmit power, an uplink and downlink slot symbol configuration, and an antenna configuration.

26. An operating parameter configuration apparatus, wherein the apparatus comprises a first sending module and a second sending module;
the first sending module is configured to send a first broadcast message, wherein the first broadcast message is configured to indicate that an intelligent signal amplifier is supported to access the network side device; and
the second sending module is configured to send the operating parameter to the intelligent signal amplifier after successfully accessing the intelligent signal amplifier.

27. The apparatus according to the claim 26, wherein the first sending module is specifically configured to broadcast, in a case of sending SSB or broadcast information through beam scanning, the first broadcast message only in a beam direction in which the intelligent signal amplifier is required.

28. The apparatus according to claim 26, wherein the apparatus further comprises a third sending module; and
the third sending module is configured to send a reporting request to the intelligent signal amplifier after successfully accessing the intelligent signal amplifier, wherein the reporting request is configured to request the intelligent signal amplifier to report capability parameter information.

29. The apparatus according to any one of claims 26 to 28, wherein the apparatus further comprises a first receiving module; and
the first receiving module is configured to receive, before the second sending module sends the operating parameter to the intelligent signal amplifier, request information from the intelligent signal amplifier, wherein the request information is configured to request the network side device to configure an operating parameter for the intelligent signal amplifier.

30. The apparatus according to claim 29, wherein the apparatus further comprises a first determining module, wherein
the first determining module is configured to: before the second sending module sends the operating parameter to the intelligent signal amplifier, determine, based on the capability parameter information carried in the request information, a device for which the request information is configured to request to configure the operating parameter as the intelligent signal amplifier.

31. The apparatus according to claim 26, wherein the apparatus further comprises a second receiving module and a second determining module;
the second receiving module is configured to: before the second sending module sends the operating parameter to the intelligent signal amplifier, receive device type information from the intelligent signal amplifier, wherein the device type information is configured to identify a device type of an access device that initiates the target random access; and
the second determining module is configured to determine that the access device corresponding to the device type information received by the second receiving module is the intelligent signal amplifier.

32. The apparatus according to claim 28, wherein the capability parameter information comprises a parameter related to at least one of the following: a carrier, a bandwidth, transmit power, an uplink and downlink slot symbol configuration, and an antenna configuration.

33. An intelligent signal amplifier, comprising a processor, a memory, and a program or an instruction stored in the memory and executable on the processor, wherein when the program or the instruction is executed by the processor, steps of the operating parameter configuration method according to any one of claims 1 to 9 are implemented.

34. A network side device, comprising a processor, a memory, and a program or an instruction stored in the memory and executable on the processor, wherein when the program or the instruction is executed by the processor, steps of the operating parameter configuration method according to any one of claims 10 to 16 are implemented.

35. A readable storage medium, wherein the readable storage medium stores a program or an instruction, and when the program or the instruction is executed by a processor, steps of the operating parameter configuration method according to any one of claims 1 to 9 or steps of the operating parameter configuration method according to any one of claims 10 to 16 are implemented.

36. A computer program product, wherein the program product is executed by at least one processor to implement the method according to any one of claims 1 to 9 or the method according to any one of claims 10 to 16.

37. A network device, wherein the network device is configured to perform the method according to any one of claims 10 to 16.
